# EUROPÄISCHE PATENTSCHRIFT

(11) **EP 0 391 982 B1**
(45) Veröffentlichungstag und Bekanntmachung des Hinweises auf die Patenterteilung: **22.06.1994**
(21) Anmeldenummer: 89903125.6
(22) Anmeldetag: 14.03.1989
(51) Int. Cl.: B60R 22/36

(54) **HUBROLLEN-RETRACTOR FÜR FAHRZEUGSICHERHEITSGURTE**
REEL-TYPE RETRACTOR FOR MOTOR VEHICLE SAFETY BELTS
ENROULEURS DE CEINTURES DE SECURITE DANS DES VEHICULES

(30) Priorität: 17.03.1988 DE 3808873
(43) Veröffentlichungstag der Anmeldung: 17.10.1990
(73) Patentinhaber: GENERAL ENGINEERING (NETHERLANDS) B.V., NL-3581 CV Utrecht (NL)
(72) Erfinder: GENERAL ENGINEERING (NETHERLANDS) B.V., NL-3581 CV Utrecht (NL)
(74) Vertreter: Gossel, Hans K., Dipl.-Ing.
(86) Internationale Anmeldenummer: EP8900269
(87) Internationale Veröffentlichungsnummer: WO8908570

(56) Entgegenhaltungen:
- DE-A- 3 043 014
- DE-A- 3 307 093
- DE-A- 3 421 960
- FR-A- 2 481 604

## Beschreibung

Die Erfindung betrifft einen Hubrollen-Retraktor für Fahrzeugsicherheitsgurte nach dem Oberbegriff des Patentanspruchs 1.

Grundsätzlich sind Aufroller unter dem Begriff "Hubrollen-Retraktor" bekannt geworden und gehören zum Stand der Technik. In der US-A-3.074.761 wurde die Basisidee erstmals beschrieben. Der Lösungsvorschlag in der DE-A-34 18 378 ist die Grundlage für den ersten, serienmäßigen Hubrollen-Retraktor, der erstmals sowohl fahrzeugsensitiv als auch gurtbandsensitiv im Sperrfall die Welle mit ihrer Verzahnung synchronisiert in die Verzahnung des Gehäuses überführt. Die DE-A-33 07 093 betrifft ebenfalls einen Hubrollen-Retraktor.

Aus der FR-A-2 481 604 ist ein Rollen-Retraktor gemäß dem Oberbegriff des Patentanspruchs 1 bekannt. Der entscheidende Vorteil der Hubrollen-Retraktoren ist in der kostengünstigen Bauausführung zu sehen, da weniger Bauteile erforderlich sind. Wegen der großflächigen Kraftübertragung der Welle in das Gehäuse können einfache Werkstoffe eingesetzt werden.

Ein systembedingter Nachteil besteht darin, daß man in der Gurtauszugsrichtung nicht sehr variabel ist. Die Gurtauszugsrichtung wird von der Lage der Verzahnung im Gehäuse bestimmt und ist innerhalb enger Grenzen (etwa +/- 15 ° von der Sollrichtung) einzuhalten. Auch ein unkontrollierter Schrägauszug des Gurtbandes kann zu Problemen führen, wenn er ein zulässiges Maß übersteigt, da ja die Welle auf beiden Seiten synchronisiert einsteuern muß.

Besteht eine zwangsmäßige Einsteuerführung nur auf einer Seite, in der Regel auf der Mechanikseite, ist in ungünstigen Fällen nicht sichergestellt, daß die Welle auch auf der Federseite in die richtigen, korrespondierenden Zähne einsteuert.

Daraus resultiert, daß eine freie, universelle Einsatzmöglichkeit nicht für alle Fälle gegeben ist. Sollen aber alle Fälle abgedeckt werden, müssen ggf. teure Neukonstruktionen geschaffen werden, die dem jeweiligen Anwendungsfall mit seinen speziellen Eigenheiten gerecht werden.

Aufgabe der Erfindung ist es, bei kleinstmöglichen äußeren Abmessungen des Retraktors eine absolut sichere Einsteuerung der Welle auch unter erschwerten Bedingungen (Gurtbandschrägauszug) auf beiden Seiten zu gewährleisten, wobei die Wellenlager lastfrei bleiben sollen und die zulässige Gurtauszugsrichtung (vom Gurtwickel) mindestens einen Bereich von 90° abdecken soll, und eine hohe Belastungsfähigkeit zu erreichen.

Die Lösung der Aufgabe ergibt sich für einen gattungsgemäßen Hubrollen-Retraktor aus den Merkmalen des Patentanspruchs 1.

Bevorzugte Ausgestaltungen der Erfindungen sind in den sich an den Hauptanspruch anschließenden Unteransprüchen wiedergegeben.

Mit der US-A-3.876.164, der US-A-3.659.800, der US-A-3.695.545 und der US-A-3.851.837 ist ein Stand der Technik bekannt geworden, in der ebenfalls eine Wellenbewegung in die endgültige Blockierlage über das Abstützen gegen einen Riegel erfolgt. Im Vergleich zur vorliegenden erfindungsgemäßen Lösung liegen aber eine Reihe erheblicher Nachteile vor:
- Die Einsteuerung des Sperriegels erfolgt direkt und unsynchronisiert. Das gefürchtete "lever bouncing" ist deshalb nicht mit Sicherheit auszuschließen. (lever bouncing: beim Einsteuern treffen Riegelspitze und Zahnspitze aufeinander und der Sperriegel wird zurückgeschlagen).
- Das Wellenlager muß im Blockierfall erhebliche Lasten übertragen, was werkstoffmäßig und dimensionierungsmäßig berücksichtigt werden muß. Eine konstruktive Auslegung nur nach Gesichtspunkten des Komforts und der Bauabmessungen ist nicht möglich.
- Die Wellenverzahnung ist mit Spiel neben den Gehäuseschenkeln angeordnet. Daraus resultiert eine breitere Bauausführung.
- Der Schwenkpunkt für die Welleneinsteuerung und der Drehpunkt für den Riegel sind außerhalb des max. Gurtbandwickeldurchmessers angeordnet. Daraus resultieren große äußere Bauabmessungen.
- Für die Lastübertragung in das Gehäuse sind jeweils nur ein Zahn pro Seite vorgesehen. Daraus resultiert eine geringe Belastungsfähigkeit.

Die bisher einzige serienmäßig hergestellte Ausführung gem. der DE-OS 34 18 378 stellt praktisch die 1. Generation von Hubrollen-Retractoren dar. In Abgrenzung dazu kann die erfindungsgemäße Lösung als 2. Generation bezeichnet werden.

Aufgrund der zusätzlichen Vorblockierung der Welle über einen Doppelriegel auf beiden Seiten, die zudem sychronisiert erfolgt, ergeben sich universellere Einsatzmöglichkeiten bezüglich der Gurtbandauszugsrichtungen aus dem Retractor heraus. Und zwar sowohl bezüglich der Abzugsrichtung vom Gurtwickel als auch bezüglich des möglichen, kritischen Schrägauszuges. Die erfindungsgemäße Lösung ist eine "heavy-duty-Lösung", auf die der Begriff "idiotensicher" im Hinblick auf Belastungssicherheit und Belastungsfähigkeit angewendet werden kann.

Die synchronisierte Vorblockierung der Welle auf beiden Seiten bewirkt im Lastfall eine zwangsgesteuerte Einsteuerung der Welle in die Blockierverzahnung unter allen denkbaren, schwierigen Umständen. Die Welle hat nicht nur auf der Mechanikseite, sondern auch auf der Federseite keinen Freiheitsgrad mehr, einem anderen Einsteuerungsweg zu folgen als dem konstruktiv vorgegebenen.

Aufgrund der metallischen Ausführung des Doppelriegels können auch keine großen Streubreiten in der Einsteuerkurve auftreten, wie sie aufgrund elastischer Stoßverformungen bei Verwendung bei Steuerungsteilen nur aus Kunststoff auftreten können.

Bei einer eng tolerierbaren Einsteuerkurve wie bei der erfindungsgemäßen Lösung läßt sich eine größere Zähnezahl für die Welle realisieren, was sich wiederum vorteilhaft auf kurze Gurtbandauszüge im Blockierfall auswirkt.

Ein in den Zeichnungen wiedergegebenes Ausführungsbeispiel wird nachfolgend beschrieben:
Es zeigen:
- Fig.1: eine Retractor-Seitenansicht ohne Steuerungsmechanik und Schenkelplatte,
- Fig. 2: das vordere, obere Quartal des Gehäuseschenkels in vergrößertem Maßstab,
- Fig. 3: einen Schnitt durch den Gehäuseschenkel auf der Mechanikseite.

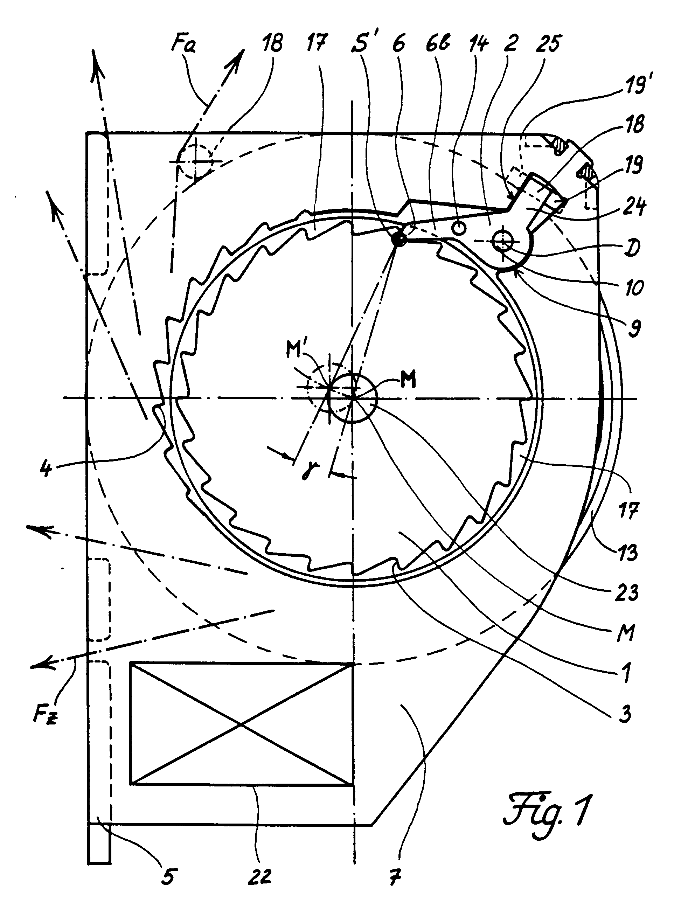

Der große zulässige Gurtbandauszugsbereich von etwa 120° geht deutlich aus der Fig. 1 hervor. Durch die zusätzliche Abstützkraft des Doppelriegels 2 wird die Welle 1 bei allen angedeuteten Zugrichtungen von Fₐ bis F_{z} fest in der Blockierverzahnung 4 gehalten, wodurch eine sichere Lastübertragung gewährleistet ist.

Der Wellenzapfen 23 bleibt bei der Lastübertragung völlig lastfrei, so daß er zur Erzielung geringer Reibwiderstände dünn und ggf. aus Kunststoff ausgebildet sein kann.

Der Doppelriegel 2 ist in der Ebene der Gehäuseschenkel 7 auf der Mechanik- und Federseite drehbar angeordnet und über einen Bügel starr und drehfest als einstückiges Teil ausgebildet.

Ein Steuerzapfen 14 des Doppelriegels 2 auf der Mechanikseite durchragt eine Öffnung in der Schenkelplatte 12 und greift von hinten in eine Führungsnut 15 einer Steuerscheibe 16 ein. Diese Steuerscheibe 16 lenkt den Doppelriegel 2 bei einer gurtband- und/oder fahrzeugsensitiven Aktivierung und bei Gurtauszug in die Sperrstellung aus. Dieser Bewegungsvorgang der Einsteuerung des Doppelriegels 2 in eine Zahnlücke der Wellenverzahnung 3 erfolgt synchronisiert.

Lastaufnehmende Blockierverzahnungen aus Metall können nie so ausgebildet werden, daß ein freier, nicht zwangsgesteuerter Einschwenkvorgang eines Riegels 100%ig sicher erfolgt. Eine Zahn - auf - Zahn - Blockierung ist möglich, die den im Einschwenken begriffenen Riegel zurückschlägt. Für dieses Phänomen hat sich in Fachkreisen der Begriff "lever bouncing" eingebürgert. Einsteuerungen von/in lastaufnehmende Blockierungen müssen synchronisiert erfolgen.

Bei der erfindungsgemäßen Lösung wird die synchronisierte Einsteuerung des Doppelriegels 2 in die Wellenverzahnung 3 über den Steuerzapfen 14 bewerkstelligt. Bevor auf beiden Seiten der Welle 1 je ein Wellenzahn 3 gegen die Zahnspitze 6 des Doppelriegels 2 stößt, ist der Doppelriegel 2 bereits bis zum Zahngrunddurchmesser Di eingesteuert.

Bei weiterem Zug am Gurtband 13 schwenkt sodann die Welle 1 zwangsgesteuert auf beiden Seiten in die Blockierverzahnung 4 ein. Entscheidend ist hierbei, daß dies nicht nur auf der Mechanikseite passiert, sondern auch auf der Federseite. Für beide Wellenseiten gibt es unabhängig von Störeinflüssen (überlagerte Beschleunigungen und insbesondere Gurtbandschrägauszüge) keine andere Möglichkeit als ordnungsgemäß in die korrespondierenden Zahnlücken der Blockierverzahnung 4 einzuschwenken. Diese Art der Welleneinsteuerung kann als absolut sicher bezeichnet werden.

Aufgrund der zusätzlichen Abstützkomponente, die der eingelenkte Doppelriegel 2 erzeugt, ergibt sich auf die Welle 1 bei allen Gurtauszugsrichtungen von Fₐ bis F_{z} immer ein in die Blockierverzahnung 4 einlenkendes Moment. Diese Tatsache macht auch die Lastübertragung unter allen eventuellen Störeinflüssen (z. B. zusätzliche Stöße entgegen der Einsteuerrichtung) absolut sicher. Somit ist eine hohe Belastungsfähigkeit gegeben.

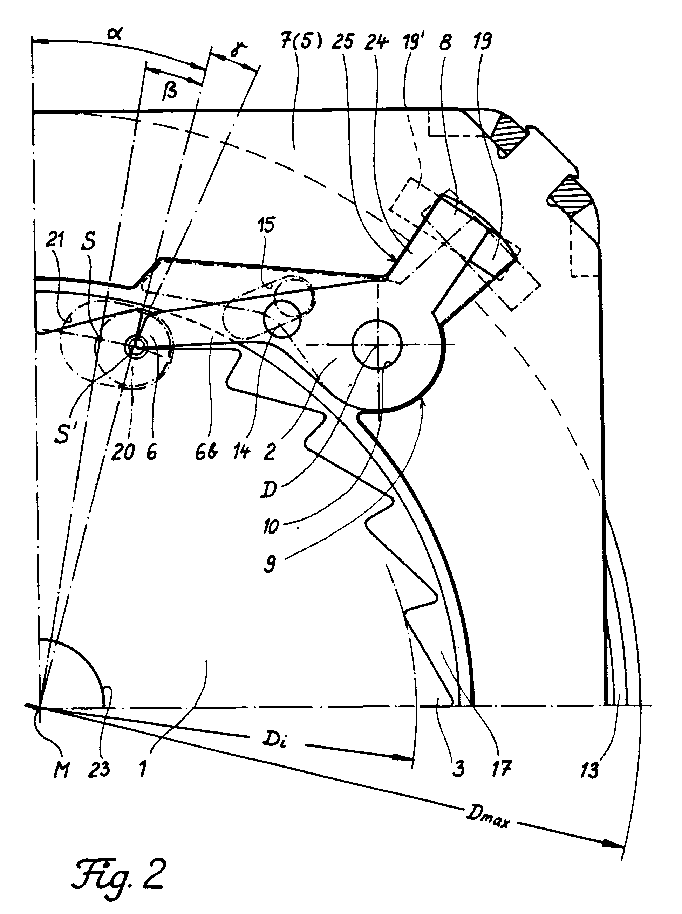

Die Fig. 2 zeigt den entscheidenden Ausschnitt mit dem Doppelriegel 2 im vergrößerten Maßstab. Die Lage der Schwenkpunktachse S' wird dabei deutlich. Der Winkel α kann zwischen 0° und 15° betragen. Die Zahnspitze 6 des Doppelriegels 2 ist mit einem Winkel γ versehen, dem Schwenkwinkel der Welle 1, damit in voll blockiertem Zustand zu den Wellenzähnen 3 eine vollflächige Anlage besteht.

Der Bügel 8 des Doppelriegels 2 ist nach vorne und hinten mit Abstützflächen 19, 19' verbreitert ausgeführt, die sich ständig hinter den Gehäuseschenkeln 7 bewegen. Im eingelenkten Zustand des Doppelriegels 2 ergibt sich daraus eine formschlüssige Abstützmöglichkeit für die Welle 1 in axialer Richtung.

In einer Sonderausführung kann der Flansch 17 der Welle 1 so groß ausgeführt werden, daß mit dem Zahnbereich 6b des Doppelriegels 2 auch im Ruhezustand eine ständige Überdeckung besteht. Dann werden axiale Stöße auf die Welle 1 schon vor einer Auslenkung mit Gurtauszug sicher über einen unelastischen, metallischen Formschluß abgefangen.

Die zentrale Drehführung und Lagefixierung des Doppelriegels 2 erfolgt über einen Zapfen 11 der Schenkelplatte 12, der in die Bohrung 10 des Doppelriegels 2 eingreift.

Die kraftmäßige Abstützung des Doppelriegels 2 erfolgt gegen eine kreisbogenförmige Ausnehmung 9 in der Ebene der Gehäuseschenkel 7. Die Drehbewegung des Doppelriegels wird abgefangen durch den Anschlag je eines Steges 24 gegen die Schenkelwandung 25.

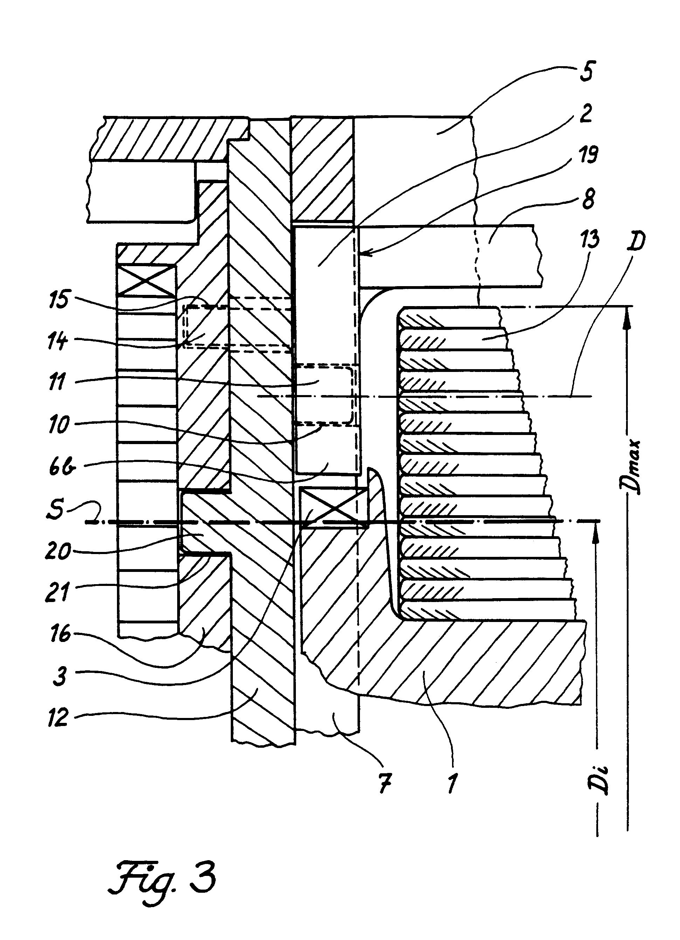

Die Fig. 3 verdeutlicht den konstruktiven Aufbau im Schnitt. Der Schwenkpunkt S der Steuerscheibe 16 liegt auf dem gleichen Radius wie die Schwenkpunktachse S' für die Welle 1. Ein Zapfen 20 an der betreffenden Stelle an der Schenkelplatte 12, der in eine Bohrung 21 der Steuerscheibe 16 eingreift, sorgt für die örtliche Lagefixierung. Die Bohrung 21 ist dabei als kurzes Langloch mit Radien um den Wellenmittelpunkt M ausgebildet, da die Steuerscheibe 16 zwei Bewegungsabläufe hintereinander absolviert. Zunächst dreht sie sich um den Wellenmittelpunkt M um einen kleinen Winkel β (max. 5°), um den Doppelriegel 2 in die Wellenverzahnung 3 einzulenken. In diesem Zustand sind die Welle 1 und die Steuerscheibe 16 über einen eingesteuerten nicht dargestellten Sensorriegel miteinander formschlüssig verbunden.

Ist der Doppelriegel 2 im Zahneingriff, schlägt die Steuerscheibe 16 mit ihrem Langloch 21 gegen den Zapfen 20 an. Dieser Zusammenhang ist strichpunktiert aus der Fig. 2 zu ersehen. Bei weiterem Gurtauszug schwenkt sodann die Welle 1 mit der Steuerscheibe 16 (beide gekuppelt) um die Schwenkpunktachse S' in die endgültige Blockierstellung ein. Die Bewegungsabfolge der Steuerscheib 16 ist also: 1. Drehen, 2. Schwenken.

Der Steuerungsbewegung der Wickelwelle kommt bei einem Hubrollen-Retractor eine besondere Bedeutung zu, da sie im Gefahrenfall in Bruchteilen von Sekunden synchronisiert von der federbelasteten Ruhelage in die Blockierlage überführt werden muß. Man kann von einer fliegend gelagerten Wickelwelle sprechen.

Die Überführung der Wickelwelle in die Blockierlage ist eine kritische Phase, da äußere Störeinflüsse nachteilige Funktionsabläufe bewirken können. So kann z. B. ein seitlicher Schrägauszug des Gurtbandes eine zeitlich versetzte Einsteuerung auf Mechanik- bzw. Federseite herbeiführen. Überlagerte Stöße beim Crash können bei ungenügender Führung ungewollte Bewegungsrichtungen der Wickelwelle in der Überführungsphase bewirken. Auch Vibrationen können die Steuerbewegung der Wickelwelle in eine unkontrollierte Richtung beeinflussen.

Die erfindungsgemäß vorgeschlagene konstruktive Steuerungsabfolge:
1. Kuppeln von Steuerscheibe und Wickelwelle über Sensor
2. Drehen der Steuerscheibe mit Winkel β um Punkt M
3. Schwenken mit Winkel γ auf Federseite mit Schwenklager und auf Mechanikseite mit Steuerscheibe um Achse S'
bedeutet eine deutliche Verbesserung der Funktionssicherheit für einen Hubrollen-Retractor.

Durch die erfindungsgemäße Lösung, den Schwenkpunkt S' auf den Zahngrunddurchmesser Di anzuordnen, sowie die Verschwenkung auf beiden Seiten um S' ablaufen zu lassen, ergibt sich der Vorteil, daß sich die Blockierzähne 100%-ig deckungsgleich zu den Wellenzähnen 3 ausbilden lassen. Das Tragbild im Zahneingriff ist also optimal - somit auch die Lastübertragung.

Die Belastungsfähigkeit wird dadurch weiter unterstützt, indem der Doppelriegel 2 während der Belastung die Welle sichernd fixiert und je nach Gurtauszugsrichtung ggf. auch einen kleinen Teil der Last überträgt.

## Patentansprüche

1. Hubrollen-Retraktor für Fahrzeugsicherheitsgurte mit einer drehbaren Wickelwelle (1) zum Speichern des Gurtbandes (13), dessen Abziehbewegung durch eine fahrzeugsensitive und/oder gurtbandsensitive Sperrvorrichtung im Gefahrenfall blockierbar ist, wobei das Blockieren über eine Verzahnung an der im Gehäuse radial verschwenkbar gelagerten Welle (1) dadurch erfolgt, daß die Welle (1) gegen die Kraft einer Feder in die Blockierlage verschwenkt wird, wobei die beidseitigen Wellenverzahnungen (3) mit gehäusefesten Verzahnungen (4) auf beiden Seiten in Eingriff gelangen und die wellenseitigen Verzahnungen (3) auf beiden Seiten innerhalb der Ebenen der beiden Gehäuseschenkel verlaufen, wobei die Aktivierungsbewegung der Welle (1) in die gehäusefeste Verzahnung (4) nach der Kupplung mit einer Steuerscheibe (16) über Sensorteile aus einer ersten Drehbewegung um einen Punkt (M) der den Mittelpunkt der Wickelwelle (1) bildet, mit einem Winkel (β) besteht, während der ein Riegel in die Wellenverzahnung (3) einsteuert, und einer zweiten Schwenkbewegung um einen Punkt (S'), der auf dem Zahngrunddurchmesser (Dᵢ) des Zahnes der Wellenverzahnung liegt, in dem der Riegel einsteuert, mit einem Winkel (γ), während der sich die Welle (1) beidseitig gegen die Zahnspitzen (6) des Riegels abstützt,
**dadurch gekennzeichnet,**
daß der Riegel als Doppelriegel (2) ausgebildet ist, der beidseitig in die Wellenverzahnung (3) einsteuert und daß die Abstützung des Doppelriegels (2) im Sperrfall gegen je eine kreisförmige Ausnehmung (9) in den Gehäuseschenkeln (7) erfolgt.

2. Hubrollen-Retraktor nach Anspruch 1, dadurch gekennzeichnet, daß der Doppelriegel (2) mit einem Zahnbereich (6, 6b) und einem Drehbereich (D) auf beiden Seiten in der Ebene der Gehäuseschenkel (7) und innerhalb des maximalen Gurtbanddurchmessers (D max) gelagert ist und daß ein Bügel (8) außerhalb des Gurtbandwickeldurchmessers (D max) die beiden Seiten verbindet.

3. Hubrollen-Retraktor nach Anspruch 1, dadurch gekennzeichnet, daß die Blockierverzahnung (4) im Gehäuse (5) auf beiden Seiten geometrisch derart ausgebildet ist, daß sie der äußeren Kontur der Wellenverzahnung (3) entspricht, die um den Punkt (S') mit dem Winkel (γ) geschwenkt ist.

4. Hubrollen-Retraktor nach Anspruch 1, dadurch gekennzeichnet, daß in der Steuerscheibe (16) eine Bohrung (21) als Langloch mit Radius um den Wellenmittelpunkt (M) ausgebildet ist und daß die Steuerbewegung der Steuerscheibe (16) zunächst als Drehen um den Wellenmittelpunkt (M) geschieht, wobei über den Steuerzapfen (14) der Doppelriegel (2) ausgelenkt wird und sodann ein Verschwenken der mit der Welle (1) gekuppelten Steuerscheibe (16) um die Schwenkpunktachse (S') in die endgültige Blockierstellung erfolgt.

5. Hubrollen-Retraktor nach den Ansprüchen 1 und 4, dadurch gekennzeichnet, daß der Schwenkpunkt der Steuerscheibe (16) auf der Schwenkpunktachse (S) liegt, der vom Zahngrunddurchmesser (Di) der Welle (1) und dem Winkel (α) definiert und von einer Bohrung-Zapfen-Konstruktion (20/21) zwischen Schenkelplatte (12) und Steuerscheibe (16) gebildet wird.

6. Hubrollen-Retraktor nach einem der Ansprüche 1 bis 5, dadurch gekennzeichnet, daß der Doppelriegel (2) auf der Mechanikseite einen Steuerzapfen (14) aufweist, der durch die Schenkelplatte (12) hindurch in eine rückseitige Führungsnut (15) der Steuerscheibe (16) ragt und von dieser in die Ruhe- und Sperrstellung bewegt wird.

7. Hubrollen-Retraktor nach einem der Ansprüche 1 bis 6, dadurch gekennzeichnet, daß der Doppelriegel (2) mit Abstützelementen (19, 19') zum Abstützen gegen die Schenkel (7) versehen ist, mit deren Hilfe im Sperrfall eine axiale Verschiebung der Welle (1), die sich mit ihren Wellenflanschen (17) gegen den Doppelriegel (2) abstützt, vermieden wird.

8. Hubrollen-Retraktor nach einem der Ansprüche 1 bis 7, dadurch gekennzeichnet, daß die Lagerung und Federkraftbeaufschlagung der Steuerscheibe (16) so ausgelegt ist, daß der Drehwiderstand bei der ersten Verdrehung zum Einschwenken des Doppelriegels (2) geringer ist als der Schwenkwiderstand beim zweiten Verschwenken der Welle (1) zum Eingriff in die Blockierverzahnung (4).

9. Hubrollen-Retraktor nach einem der Ansprüche 1 bis 8, dadurch gekennzeichnet, daß das Wellenlager auf der Federseite innerhalb der Schenkelplatte (12) um die Schwenkpunktachse (S') schwenkbar gegen eine Federkraft gelagert ist.

10. Hubrollen-Retraktor nach Anspruch 9, dadurch gekennzeichnet, daß die Federkassette auf der Federseite als Schwenklager für die Wickelwelle (1) ausgelegt ist und die Federkassette gegen die Kraft einer Feder um den Schwenkpunkt S' gemeinsam mit der Wickelwelle (1) in die Blockierlage verschwenkt.

11. Hubrollen-Retraktor nach Anspruch 1, dadurch gekennzeichnet, daß die Steuerbewegung der Wickelwelle (1) auf der Mechanikseite (7) von einer Steuerscheibe (16) bewerkstelligt wird, die über Sensorteile die Wickelwelle (1) bei Überschreiten einer vorgegebenen Verzögerung formschlüssig kuppelt und auf der Federseite von einem Schwenklager, wobei beide Teile, Steuerscheibe (16) und Schwenklager um die gleiche Schwenkachse (S') die Wickelwelle (1) in die Blockierlage verschwenken.

## Claims

1. Reel-type retractor for motor vehicle safety belts with a rotatable winding shaft (1) for storing the belt web (13), of which the unwinding movement can be blocked by a vehicle-sensitive and/or belt-sensitive locking device in a driving incident, said blocking action being effected by a gearing on the shaft (1) mounted for radial slewability in the housing, such that said shaft (1) is slewed against the force of a spring into the blocking position, the shaft gearings (3) on both sides engaging with the fixed-position gearings (4) of the housing on both sides, and the shaft gearings (3) on both sides running within the planes of the two housing cheeks, said activation motion of the shaft (1) for engagement with the fixed gearing (4) of the housing after coupling with a control disc (16) via sensor parts consists of an initial rotary movement at an angle (β) around a point (M) which forms the centre point of the winding shaft (1), during which a latching device is engaged in the shaft gearing (3), and a second slewing motion at an angle (γ) around a point (S') which lies on the root circle diameter (Dᵢ) of the tooth of the shaft gearing with which the latching device engages, during which the shaft (1) is supported on both sides against the tooth tips (6) of said latching device,
characterised in that
the latching device is designed as a dual latch (2) which engages on both sides in the shaft gearing (3), and that the support of the dual latch (2) in the locking position is provided by a circular recess (9) in the housing cheeks (7).

2. Reel-type retractor according to Claim 1, characterised in that the double latch (2) is mounted with a tooth area (6, 6b) and a rotary area (D) on both sides in the plane of the housing cheeks (7) and within the maximum belt web diameter (D max), and that a bracket (8) outside the wound belt web diameter (D max) connects the two sides.

3. Reel-type retractor according to Claim 1, characterised in that the blocking gearing (4) in the housing (5) is geometrically shaped on both sides such that it corresponds to the outer contour of the shaft gearing (3) which is slewed around the point (S') at the angle (γ).

4. Reel-type retractor according to Claim 1, characterised in that, in the control disc (16) is a hole (21) designed as an oblong hole with a radius around the shaft centre point (M), and that the control motion of the control disc (16) initially occurs as a rotation around the shaft centre point (M), with the control pins (14) deflecting the double latch (2) outwards so that a slewing motion of the control disc (16) coupled with the shaft (1) around the slewing point axis (S') to the final blocking position takes place.

5. Reel-type retractor according to Claims 1 and 4, characterised in that the slewing point of the control disc (16) lies on the slewing point axis (S) which is defined by the root circle diameter (Dᵢ) of the shaft (1) and the angle (α), and is formed by a hole-pin construction (20/21) between cheek plate (12) and control disc (16).

6. Reel-type retractor according to one of Claims 1 to 5, characterised in that the double latch (2) exhibits on the mechanism side a control pin (14) which protrudes through the cheek plate (12) into a guide groove (15) at the rear of the control disc (16) and is moved by this to its neutral and locking positions.

7. Reel-type retractor according to one of Claims 1 to 6, characterised in that the double latch (2) is provided with support elements (19, 19') for supporting it against the cheeks (7), which assist in the locked condition in the avoidance of any axial displacement of the shaft (1) which is supported with its shaft flanges (17) against the double latch (2).

8. Reel-type retractor according to one of Claims 1 to 7, characterised in that the mounting arrangement and spring actuation mechanism of the control disc (16) is designed such that the resistance to rotation during the first rotary movement for slewing the double latch (2) into position is lower than the slewing resistance during the second slewing motion of the shaft (1) for engagement in the blocking gearing (4).

9. Reel-type retractor according to one of Claims 1 to 8, characterised in that the shaft bearing on the spring side is mounted within the cheek plate (12) such that it is slewable against a spring force around the slewing point axis (S').

10. Reel-type retractor according to Claim 9, characterised in that the spring cassette on the spring side is designed as a slewing bearing for the winding shaft (1), and the spring cassette slews against the force of a spring around the slewing point S' together with the winding shaft (1) into the blocking position.

11. Reel-type retractor according to Claim 1, characterised in that the control movement of the winding shaft (1) on the mechanism side (7) is effected by a control disc (16) which positively couples with the winding shaft (1) via sensor elements once a predetermined delay has been exceeded, and on the spring side by a slewing bearing, both parts, control disc (16) and slewing bearing, rotating around the same slewing axis (S') of the winding shaft (1) into the blocking position.

## Revendications

1. Enrouleur de ceinture de sécurité dans des véhicules avec un axe d'enroulement rotatif (1) pour enrouler la ceinture (13) dont le mouvement de déroulement doit être bloqué en cas de danger par un dispositif de blocage sensible au véhicule et/ou sensible à la ceinture, le blocage étant effectué par l'intermédiaire d'une denture sur l'arbre (1) qui est logé dans le boitier de manière à pouvoir pivoter radialement, de sorte que l'arbre (1) est pivoté contre la force d'un ressort en position de blocage, les dentures d'arbre (3) bilatérales entrant des deux côtés en prise avec les dentures (4) solidaires du boîtier, et les dentures (3) côté arbre s'étendant des deux côtés à l'intérieur des plans des deux branches de boîtier, le mouvement d'activation de l'arbre (1) pour son engagement dans la denture (4) solidaire du boîtier après l'embrayage avec un disque de commande (16) par l'intermédiaire de pièces captrices est formé à partir d'un premier mouvement de pivotement à un angle (β) autour d'un point (M) qui constitue le point central de l'arbre d'enroulement (1) alors qu'un verrou s'engage dans la denture (3) de l'arbre, et un deuxième mouvement de pivotement à un angle (γ) autour d'un point (S') qui se trouve sur le diamètre de la racine de la dent (Di) de la dent de la denture de l'arbre dans laquelle le verrou s'engage alors que l'arbre (1) s'appuie des deux côtés contre les pointes de la dent (6) du verrou,
caractérisé
en ce que le verrou est formé comme double verrou (2) qui s'engage des deux côtés dans la denture de l'arbre (3) et que l'appui du double verrou (2) dans la position de blocage se fait contre une échancrure circulaire (9) dans chacune des branches de boîtier (7).

2. Enrouleur de ceinture selon la revendication 1, caractérisé en ce que le double verrou (2) est logé par une zone dentée (6, 6b) et une zone tournante (D) des deux côtés dans le plan des branches de boîtier (7) et à l'intérieur du diamètre maximal de la ceinture (D max) et qu'un étrier (8) en dehors du diamètre d'enroulement de la ceinture (D max) relie les deux côtés.

3. Enrouleur de ceinture selon la revendication 1, caractérisé en ce que la denture de blocage (4) dans le boîtier (5) est formée géométriquement des deux côtés de manière à ce qu'elle corresponde au contour extérieur de la denture de l'arbre (3) qui est pivotée autour du point (S') à l'angle (γ)

4. Enrouleur de ceinture selon la revendication 1, caractérisé en ce que le disque de commande (16) présente un perçage (21) comme trou oblong avec un rayon autour du point central de l'arbre (M) et que le mouvement de commande du disque de commande (16) est effectué d'abord en tant que pivotement autour du point central de l'arbre (M), le double verrou (2) étant dévié vers l'extérieur par le tenon de commande (14) de sorte qu'un pivotement du disque de commande (16) raccordé à l'arbre (1) autour de l'axe de pivotement (S') dans la position de blocage définitive est effectué.

5. Enrouleur de ceinture selon les revendications 1 et 4, caractérisé en ce que le point de pivotement du disque de commande (16) se trouve sur l'axe du point de pivotement (S) défini par le diamètre de la racine de la dent (Di) de l'axe (1) et l'angle (α) et qui est formé par une construction de perçage-tenon (20/21) entre la plaque de branche (12) et le disque de commande (16).

6. Enrouleur de ceinture selon l'une quelconque des revendications 1 à 5, caractérisé en ce que le double verrou (2) présente sur le côté mécanique un tenon de commande (14) qui s'étend à travers la plaque de branche (12) dans une rainure de guidage (15) à l'arrière du disque de commande (16) et est déplacé par ce dernier dans la position de repos et la position de blocage.

7. Enrouleur de ceinture selon l'une quelconque des revendications 1 à 6, caractérisé en ce que le double verrou (2) présente des éléments d'appui (19, 19') pour s'appuyer contre les branches (7), à l'aide desquels un déplacement axial de l'arbre qui s'appuie par ses flasques d'arbre (17) contre le double verrou (2) est évité à l'état de verrouillage.

8. Enrouleur de ceinture selon l'une des revendications 1 à 7, caractérisé en ce que la disposition et la compression du ressort du disque de commande (16) sont conçues de manière à ce que la résistance au pivotement lors du premier pivotement pour la mise en position du double verrou (2) soit inférieure à la résistance au pivotement lors du deuxième pivotement de l'arbre (1) en vue de son engagement dans la denture de blocage (4).

9. Enrouleur de ceinture selon l'une des revendications 1 à 8, caractérisé en ce que le palier d'arbre côté ressort est logé à l'intérieur de la plaque de branche (12) de manière à pouvoir pivoter contre une force de ressort autour de l'axe du point de pivotement (S').

10. Enrouleur de ceinture selon la revendication 9, caractérisé en ce que la cassette de ressort est conçue côté ressort comme palier de pivotement pour l'arbre d'enroulement (1) et que la cassette de ressort est pivotée contre la force d'un ressort autour du point de pivotement (S') dans la position de blocage ensemble avec l'arbre d'enroulement (1).

11. Enrouleur de ceinture selon la revendication 1, caractérisé en ce que le mouvement de commande de l'arbre d'enroulement (1) est réalisé côté mécanique (7) par un disque de commande (16) qui, par l'intermédiaire de pièces captrices, s'embraye en engagement positif avec l'arbre d'enroulement (1) lorsqu'une décélération prédéterminée est dépassée, et du côté ressort, par un palier de pivotement, les deux pièces, disque de commande (16), palier de pivotement, pivotant autour du même axe de pivotement (S'), l'arbre d'enroulement (1) en position de blocage.
